# EUROPEAN PATENT APPLICATION

(11) **EP 1 530 935 A1**
(43) Date of publication of application: **18.05.2005**
(21) Application number: 04105560.9
(22) Date of filing: 05.11.2004
(51) Int. Cl.: A47G 19/22

(54) **Valve for drinking cup**

(30) Priority: 11.11.2003 IT MI20030526
(71) Applicant: ARTSANA S.p.A., 22070 Grandate, (Como) (IT)
(72) Inventor: Catelli, Pietro, 22100, Como (IT)
(74) Representative: Ripamonti, Enrico, Dr. Ing.

(57) **Abstract**

A valve member (1) for a cup (2) enabling a young child to ingest liquids, said cup comprising a concave body (3) open on a side (4) receiving a cap (8) provided with a first aperture (9) through which the liquid is ingested by the child, and with a second aperture (13) for entry of air to compensate the pressure inside the cup (2), said valve member (1) comprising a body (20) disposed on the open side (4) of the cup (2) and presenting a first valve (27) positioned at the first aperture (9) of the cap (8) and a second valve (28) positioned at the second aperture (13) of the cap (8). The valve member (1) is in one piece and is self-supporting within said cup (2).

## Description

The present invention relates to a valve member in accordance with the introduction to the main claim.

A cup enabling a young child (generally not yet able to drink from a glass) to ingest a liquid or beverage is know to comprise a concave body closed on an open side by a cap presenting an aperture from which the child can ingest the liquid. At said aperture a spout is provided enabling the child to easily ingest the liquid and in this manner to safely swallow it. The cap also presents another aperture enabling compensation air to enter the cup in order to compensate the vacuum which is created in the cup when the child ingests the liquid.

On the open side of the cup a valve member is usually present to close at least that aperture from which the child can ingest the liquid or beverage, when not in use. This valve member presents a body which can take various shapes but is usually of complex construction, and often does not easily allow the compensation air to enter.

Said member, usually of silicone rubber or the like, is of a consistency such that it cannot be self-supporting within the cup while at the same time operating properly when the cup is in use. In other words, said member cannot be independently secured to the hollow body of the cup or to the cap while at the same time ensuring that the liquid contained in the cup can be ingested by the child yet preventing any liquid leakage from the cap or from the open end or side of the cup body. For this reason, said valve member is usually associated with a stiffening element, for example disposed over a large part of its body or on any portion of this latter where a corresponding lip valve is positioned.

This solution (i.e. the presence of a stiffeni ng piece associated with the body of the valve member) has the drawback of not enabling the member to be easily, extensively and correctly cleaned, giving rise to possible hygiene problems when the liquid contained in the cup is milk, fruit juice or the like, of which the residues between the body of the valve member and the stiffening piece can give rise to bacteria, with obvious health problems.

An object of the present invention is to provide a valve member which is improved compared with similar valve members of the state of the art.

A particular object of the invention is to provide a valve member which is simple to construct and to apply to the cup.

Another object is to provide a valve member which can be easily and reliably cleaned.

These and further objects which will be apparent to the expert of the art are attained by a valve member in accordance with the accompanying claims.

The present invention will be more apparent from the accompanying drawing, which is provided by way of non-limiting example and in which:
Figure 1 is a perspective view of a valve member of the invention taken from below;
Figure 2 is a cross-section through the valve member of Figure 1 applied to a cup;
Figures 3 and 4 are views, similar to those of Figures 1 and 2 respectively, of a variant of the invention.

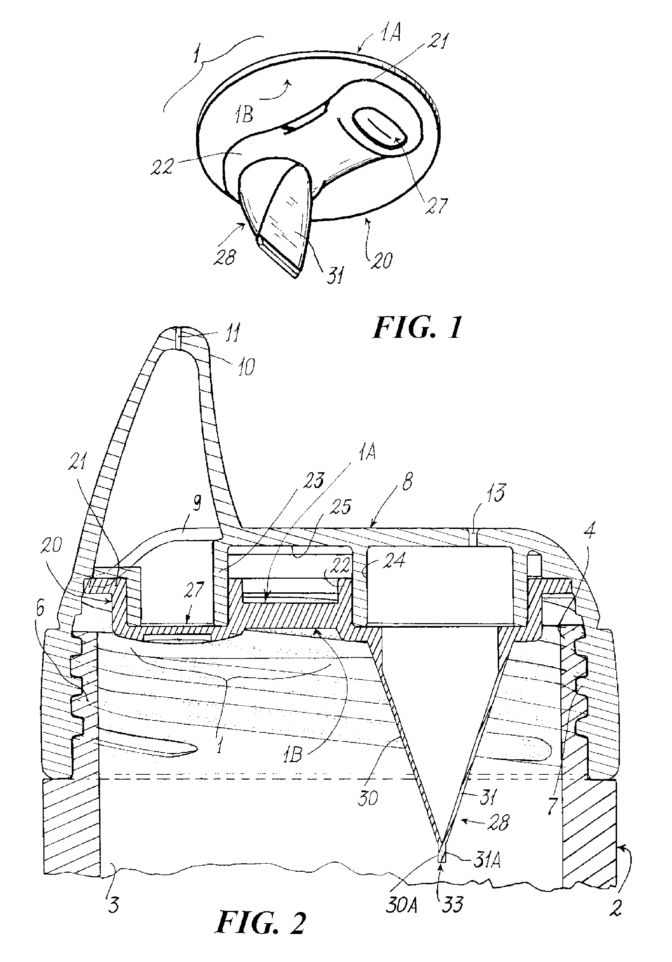

With reference to Figures 1 and 2, these show a valve member 1 associated with a cup 2 (of known type) enabling a young child to ingest a liquid and hence learn to drink independently. This cup comprises a hollow body 3 having an open side 4 and a lateral wall 5. This latter, in proximity to the open side 4, has a threaded portion 6 with which a threaded portion 7 of a cap 8 cooperates.

The cap 8 comprises an aperture 9 at which a spout 10 open at 11 is preferably present to facilitate the ingesting of a beverage contained in the hollow body 3. This cap comprises another aperture (essentially a hole) through which air can penetrate into the cup 2 to compensate the pressure variation which occurs therein each time the beverage is extracted.

The valve member 1 is positioned in correspondence with the open side 4. It is preferably formed in one piece of atoxic material and is elastically deformable. The member 1 comprises a body 20 presenting portions (recessed from the upper side 1A of the member or projecting from the lower side 1 B) 21 and 22 arranged to removably engage corresponding portions 23 and 24 which project from that (inner) wall 25 of the cup 8 facing the interior of the cup 2 and are located in correspondence with the spout 10 and the aperture 13. The body 20 is self supporting on the cap and does not require any additional element or stiffening piece for this purpose. Said engagement is enabled by the elasticity of the material from which the body 20 is formed; the fact that it is in one piece and is removable enables it to be easily cleaned, necessary in particular when the liquid contained in the cup is milk or fruit juice, for example.

The body 20 comprises a first and a second valve 27 and 28, the first being provided in the portion 21 and the second in the portion 22 of the body 20. The first valve 27 is defined by a slot valve and is positioned at the aperture 9 of the cap 8; the second valve 28 is a lip valve of conical form facing the interior of the cup 2. Said second (lip) valve hence comprises two portions 30 and 31 which can move relative to each other and touch at their ends 30A and 31A to define the cusp or vertex of the said conical form. The second valve 28 can be opened at its vertex by separating the ends 30A and 31A of the portions 30 and 31. This separation takes place at the moment in which the child ingests the beverage contained in the cup 2 via the spout 10: on creating a vacuum within the cup, the portions 30 and 31 separate at their ends to enable air to penetrate into the body 3 through the hole 13 and the second valve 28. The lip valve can open with only minimum vacuum within the body 3 generated by the drawing of the liquid by the child, resulting in rapid entry of air to compensate the pressure in the body 3. This means that the child does not have to make effort while drinking, so simplifying this operation.

Likewise, the valve 28 closes rapidly when the child ceases to drink, hence ensuring that the hole 13 closes (to hence prevent passage therethrough of the liquid contained in the cup 2).

The aforedescribed solution is simple to construct, to mount inside the cup 2, and to use. It also allows simple and reliable cleaning of the cup and of all its associated elements, i.e. the cap 8 and in particular the valve member 1.

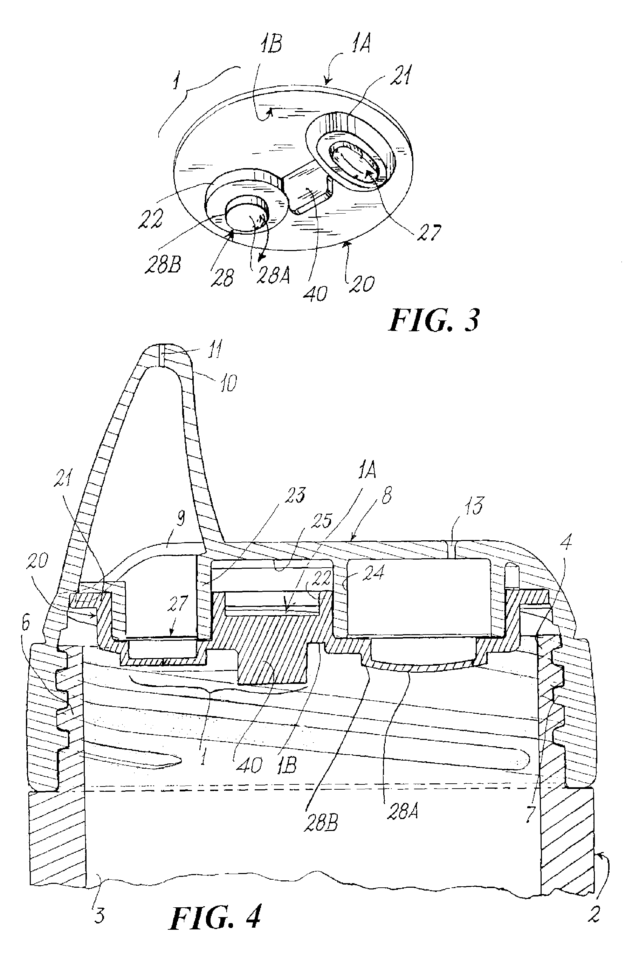

In a variant, shown in Figures 3 and 4, the valve 28 does not have the conical form of Figures 1 and 2, but instead is flat and comprises a substantially circular portion or fin 28A able to separate from the portion 21, to which it is joined only by a short peripheral portion 28B. This separation occurs when the child ingests the liquid contained in the cup in order to draw air from the outside thereof and compensate its internal pressure.

Alternatively, the valve 28 can also be of the same type as the first valve 27 (i.e. of slot type).

Provided between the portions 21 and 22 there is a fin 40 projecting from the side 1 B of the body 20 of the member 1 to enable this latter to be manipulated.

The member 1 can be associated either with the cap 8 or with the open side 4 of the cup (for example drawn over the free edge of this latter) and, by virtue of being in one piece, can be separated therefrom for cleaning purposes, said cleaning being thorough, simple and complete, so ensuring that the valve member is completely hygienic.

## Claims

1. A valve member (1) for a cup (2) enabling a young child to ingest liquids, said cup comprising a concave body (3) open on a side (4) receiving a cap (8) provided with a first aperture (9) through which the liquid is ingested by the child, and with a second aperture (13) for entry of air to compensate the pressure inside the cup (2), said valve member (1) comprising a body (20) disposed on the open side (4) of the cup (2) and presenting a first valve (27) positioned at the first aperture (9) of the cap (8) and a second valve (28) positioned at the second aperture (13) of the cap (8), said valve member being **characterised by** being constructed in one piece and being self-supporting within said cup.

2. A valve member as claimed in claim 1, **characterised by** not being provided with stiffening elements and/or movable elements detached from its body (20).

3. A valve member as claimed in claim 1, **characterised by** being secured to the open side (4) of the cup.

4. A valve member as claimed in claim 1, **characterised by** being associated with the cap (8).

5. A valve member as claimed in claim 1, **characterised in that** its body (20) is of elastically deformable atoxic material.

6. A valve member as claimed in claim 1, **characterised in that** the second valve (28) is a lip valve facing the interior of the cup (2).

7. A valve member as claimed in claim 1, **characterised in that** the first valve (27) and the second valve (28) are provided at portions (21, 22) of its body (20) which are engaged with corresponding portions (23, 24) of the cap (8).

8. A valve member as claimed in claim 1, **characterised in that** the first valve (27) is a slot valve.

9. A valve member as claimed in claim 1, **characterised in that** the second valve (28) is flat and comprises a substantially circular portion or fin (28A) which can be partially separated from the body (20) of the valve member (1), to which it is joined only along a short peripheral portion (28B).
